# EUROPEAN PATENT SPECIFICATION

(11) **EP 4 457 067 B1**
(45) Date of publication and mention of the grant of the patent: **09.04.2025**
(21) Application number: 22844675.3
(22) Date of filing: 20.12.2022
(51) Int. Cl.: B28D 1/04, B23D 45/10

(54) **CUTTING METHOD**
SCHNEIDVERFAHREN
PROCÉDÉ DE COUPE

(30) Priority: 28.12.2021 IT 202100032804
(43) Date of publication of application: 06.11.2024
(73) Proprietor: Donatoni, Giorgio, 37010 Cavaion Veronese (VR) (IT)
(72) Inventor: Donatoni, Giorgio, 37010 Cavaion Veronese (VR) (IT)
(74) Representative: Maroscia, Antonio
(86) International application number: PCT/IB2022/062523
(87) International publication number: WO 2023/126767

(56) References cited:
- EP-A1- 3 603 913

## Description

### Field of the Invention

The present invention generally relates to the technical field of machining stone and/or ceramic materials and particularly relates to a method for cutting slabs using a cutting head.

### Background Art

In the industry for machining slabs made of stone and/or ceramic material, there has been long known to use machine tools comprising a gantry structure suitable to delimit a work area and at least one horizontal beam on which there is slidably mounted a head for processing the slabs.

The machining operations carried out with such machines are for example cutting, smoothing, contouring, chamfering or the like, and they may require handling, loading/unloading and/or transfer of the products being machined from one area to another of the work area.

Generally, in the processes for cutting the slabs, the machine tool comprises a carriage slidable on the main beam and a cutting head movable above the slab with an electro-spindle to which there is rotatably associated a blade-equipped cutting tool.

Typically, when the cutting head is configured to carry out discontinuous or staggered cuts on two or more adjacent slabs along a horizontal axis, the second slab is spaced from the first slab by a value proportional to the diameter of the blade, so as to prevent the blade from interacting with the transversal peripheral edge of the second slab arranged adjacent to the first slab after cutting the first slab.

However, when the cutting head supports at least one first and one second blade which are substantially vertical and aligned, and having respective centres spaced by a predetermined distance, the distance between the first and the second slab is excessive, resulting in the increase of machining times and decrease in the number of slabs arranged adjacent to each other during machining.

In order to at least partially overcome this drawback, there have been developed cutting apparatuses and methods adapted to vary the height of each blade.

WO2017002035 discloses an apparatus and a method for cutting porcelain slabs or the like, which provides for a cutting head arranged above a plane for supporting a slab.

The head is provided with a plurality of rotary tools associated with a carriage movable along a horizontal axis and means for the vertical movement of the tools independently from each other.

The method for cutting a slab using such apparatus provides a first step in which the carriage is moved towards the slab to be machined with only one first tool lowered so as to interact with the slab.

The first tool starts to engrave the slab and, subsequently, the second tool is lowered upon exceeding the entry point on the slab. Lastly, the first tool is raised before it exits from the final part of the slab.

EP3842172 discloses an apparatus provided with a cutting head equipped with a first and a second disc-shaped blade aligned with respect to each other along a cutting direction and arranged above a work plane suitable to support at least one slab.

Furthermore, the cutting head comprises means for the vertical movement of each blade to lift each blade with respect to the slab when the blade finishes to cut the slab.

A first known drawback of such solutions lies in the fact that the means for the vertical movement act independently on each blade of the cutting head with ensuing increase in the costs for manufacturing the cutting head.

Still, another drawback of such solutions lies in the fact that the means for vertically moving the blades do not allow to reduce the distance between the slabs to be cut.

EP3603913 discloses a method of cutting slabs made of stone and/or ceramic material with a cutting head having a tool-holder frame mounted on a carriage movable above the slabs, wherein said frame supports at least one first and one second blade which are substantially vertical and mutually aligned along a longitudinal cutting direction and have respective centres spaced apart by a predetermined distance, said frame being hinged to said carriage by means of a substantially horizontal pin so as to allow the oscillation of said frame and vary the relative height of said blades and the respective cutting depth thereof, the method comprising the following steps:
- first inclination of said frame by a first predetermined angle with respect to a first slab to be cut so that said first blade is lower than said second blade by a first relative height;
- pre-cutting the first slab using said first blade;
- cutting the first slab using said second blade.

### Technical problem

In the light of the prior art, the object of the present invention is to solve the technical problem by providing a cutting head which allows to machine several slabs arranged adjacent to each other in which the blades do not damage the subsequent slab after cutting, and at the same time it allows to reduce the distance between the slabs.

### Summary of the invention

The object of the present invention is to solve the aforementioned problem by providing a method for cutting slabs made of stone and/or ceramic material which is highly effective and cost-effective.

A particular object of the present invention is to provide a cutting method of the type indicated above which allows to reduce the distance between two slabs arranged adjacent to each other when cutting them.

Another particular object of the present invention is to provide a cutting method of the type indicated above which allows to carry out discontinuous or staggered cuts on one or more adjacent slabs along a horizontal axis, preventing the blade from interacting with the transversal peripheral edge of a second slab arranged adjacent to the first slab after cutting the first slab.

A further object of the present invention is to provide a cutting method of the type indicated above which makes the operations for pre-cutting and cutting two adjacent slabs particularly quick and simple.

Another object of the present invention is to provide a cutting method of the type indicated above which allows to carry out the pre-cutting and cutting of the slab in a single phase.

A further object of the present invention is to provide a cutting method of the type indicated above which allow to reduce downtime between the discontinuous cut of one slab and the subsequent one, increasing the overall productivity.

A further object of the present invention is to provide a cutting method of the type indicated above which allows to reduce the overall set-up and installation times.

The objects mentioned above and others which will be more apparent hereinafter, are achieved by a cutting method according to claim 1.

The method provides the cutting of slabs made of stone and/or ceramic material using a cutting head having a tool-holder frame mounted on a carriage movable above the slabs along three cartesian axes, wherein the frame supports at least one first and one second blade which are substantially vertical and aligned, and having respective centres spaced apart by a predetermined distance.

The frame is hinged to the carriage by means of a substantially horizontal pin so as to allow the oscillation of the frame and vary the relative height of the blades and the cutting depth thereof.

The method comprises the following steps a) first inclination of the frame by a first predetermined angle with respect to a first slab to be cut so that the first blade is lower than the second blade by a first relative height, b) pre-cutting the first slab using the first blade, c) second inclination of the frame by a second predetermined angle with respect to the first slab so that the first blade is higher than the second blade by a second relative height, d) cutting the first slab using the second blade and e) third inclination of the frame by a third predetermined angle with respect to first slab so that the first blade is higher than the second blade by a third relative height greater than the second relative height so as to prevent the first blade from interacting with a second slab arranged adjacent to the first slab when cutting the first slab in step d).

Advantageous embodiments of the invention are attained according to the dependent claims.

### Brief description of the drawings

Further characteristics and advantages of the invention will be more apparent in the light of the detailed description of a preferred but not exclusive embodiment of a cutting method like the one mentioned above, shown by way of non-limiting example with reference to the drawings below, wherein:
**FIG. 1** is a schematic perspective view of a multi-axial machine on which there is mounted at least one cutting head of the method according to the invention;
**FIG. 2** is an enlarged lateral view of the cutting head of Fig. 1;
**FIG. 3** is a top view of several slabs arranged adjacent to each other to be cut by means of the method according to the invention;
**FIG. 4** is a schematic lateral view of a cutting method according to the state-of-the-art, with an excessive distance between the slabs;
**FIG. 5** shows the steps of the method according to the invention;
**FIGS. 6** to **12** are schematic lateral views of steps a)-e) of the method of Fig. 5.

### Detailed description of a preferred embodiment

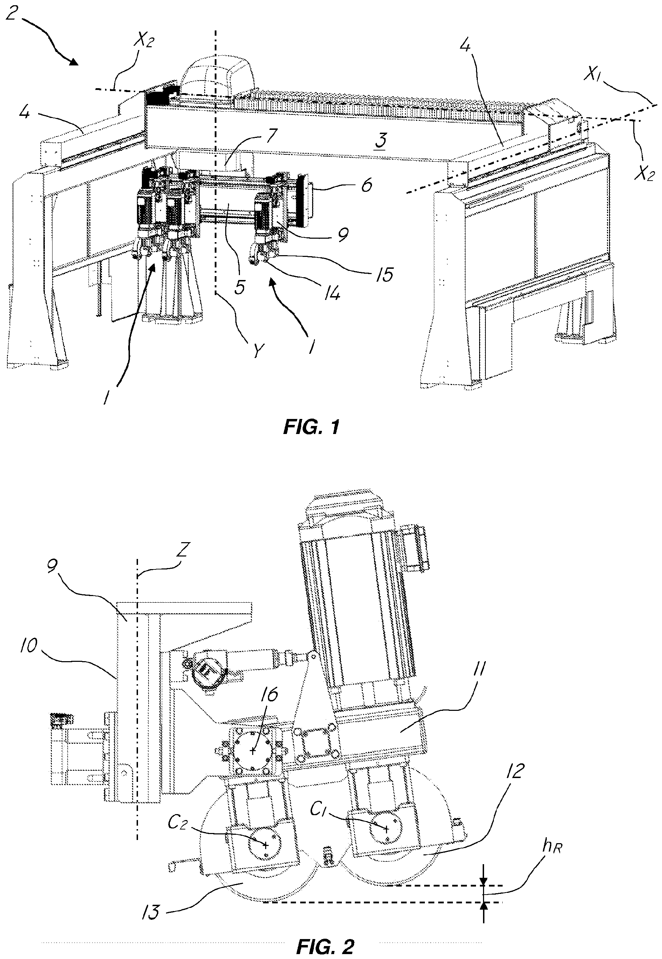

With particular reference to the figures, there is shown a method for cutting slabs **L** made of stone and/or ceramic material using a cutting head, indicated in its entirety with the reference numeral **1** and shown in **FIG. 2****.**

The cutting head **1** may be applied to a multi-axial machine tool **2** for cutting or shaping also slabs **L** made of stone material, such as stone, marble, granite, stony or concrete conglomerates, and to obtain a plurality of suitably shaped portions **L', L".**

As better shown in **FIG. 1****,** the multi-axial machine tool **2** may comprise at least one substantially horizontal main beam **3** movable along first longitudinal guide means **4** anchored to the ground, as described in the patent application EP2983879 owned by the applicant.

The machine **2** comprises at least one substantially horizontal secondary beam **5** operatively associated with the main beam **3,** and means for the discontinuous advancement of the slabs L for loading/unloading them, not shown in the figures.

Advantageously, the machine **2** may comprise one or more cutting heads **1** mounted on the secondary beam **5** and slidably movable along second guide means **6** associated with the secondary beam **5** to carry out cuts along directions parallel to a longitudinal cutting direction **D** in a single phase, as described below.

The secondary beam **5** may be mounted below the main beam **3** and can be rotatably coupled to the latter using third guide means **7** to rotate around a substantially vertical axis **Y** and to vary the direction of the common cutting direction **D.**

Furthermore, the machine tool **2** may be arranged above a table for supporting the slabs **L** being machined having a fixed or movable work plane **8.**

In a per se known manner, the slabs **L** may comprise a substantially flat upper surface **L_{A}** facing upwards and facing the cutting head **1,** a substantially flat lower surface **L_{B}** resting on the work plane **8,** and a maximum thickness **s** having predetermined and substantially constant dimensions.

As shown in **FIG. 2****,** the cutting head **1** comprises a carriage **9** movable above the slabs L along a first transversal axis **X₁** and along a second longitudinal axis **X₂** by means of respective first **4** and second guide means **6.**

Furthermore, the carriage **9** comprises movement means **10** which are substantially vertical and can be coupled to the main beam **3,** or to the secondary beam **5,** of the machine tool **2** on which the cutting head **1** is mounted so as to move it along a vertical axis **Z.** Therefore, the carriage **9** is movable above the slabs **L** along the three cartesian axes **X₁, X₂, Z.**

Advantageously, the cutting head **1** comprises a tool-holder frame **11** mounted on the carriage **9** and that supports at least one first **12** and one second blade **13** which are substantially vertical and mutually aligned along the longitudinal cutting direction **D,** and having respective centres **C₁, C₂** for coupling to respective electro-spindles **14, 15** spaced apart by a predetermined distance **V.**

Preferably, the first **12** and the second blade **13** have substantially equal diameters.

Furthermore, the frame **11** is hinged to the carriage **9** by means of a substantially horizontal pin **16** so as to allow the oscillation of the frame **11** and vary the relative height **h_{R}** of the blades **12, 13** and the respective cutting depth **h₁, h₂** thereof.

In a preferred embodiment of the invention, schematically shown in figures, the pin **16** may be positioned in proximity of a first longitudinal end of the frame **11** and above the second blade **13** so that the latter has a substantially constant height position in response to the oscillation of the frame **11,** therefore solely varying the height of the first blade **12.**

In an alternative embodiment, not shown in the figures, the pin **16** may be in intermediate position with respect to the longitudinal ends of the frame **11,** so that such intermediate position has a substantially constant height position in response to the oscillation of the frame **11.**

Therefore, the first cutting blade **12** is configured to carry out a pre-cutting **T₁** in the slab **L** having a pre-cutting depth **h₁** with depth which can be adjusted and smaller than the thickness **s** of the slab **L,** while the second cutting blade **13** is configured to carry out the final cutting **T₂** of the slab L and therefore with a cutting depth **h₂** with depth which can be adjusted and equal to or greater than the thickness **s** of the slab **L.**

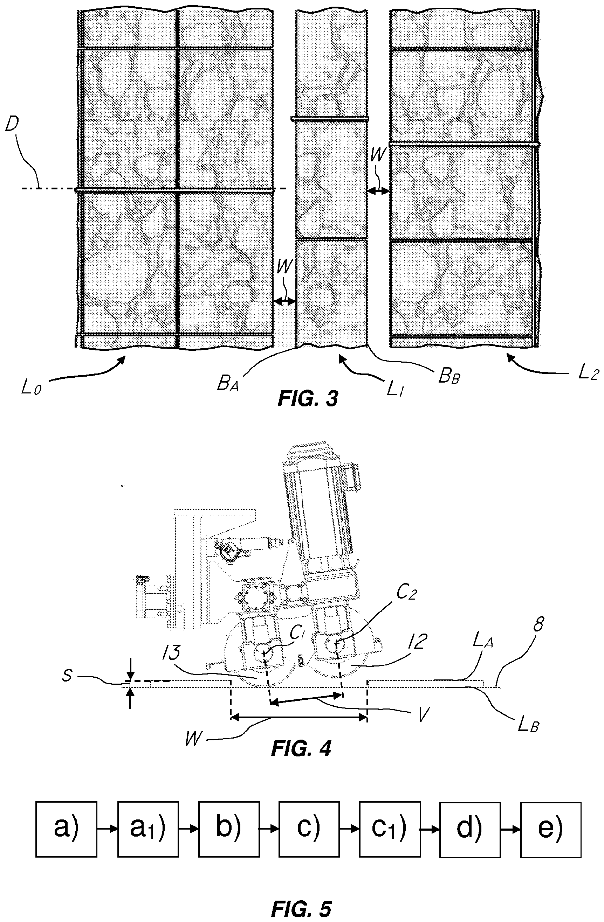

Furthermore, the slabs **L** may be arranged along the work plane 8 side by side and transversely spaced apart by a predetermined value **W,** so as to allow the discontinuous cutting thereof, or carry out the horizontally staggered cuts, as shown in **FIG. 3****.**

As better shown in **FIGS. 5-12****,** the cutting method according to the invention is carried out by the cutting head **1** so as to prevent the distance **W** between the slabs **L** from being excessive. Such excessive distance **W** is schematically shown in **FIG. 4****.**

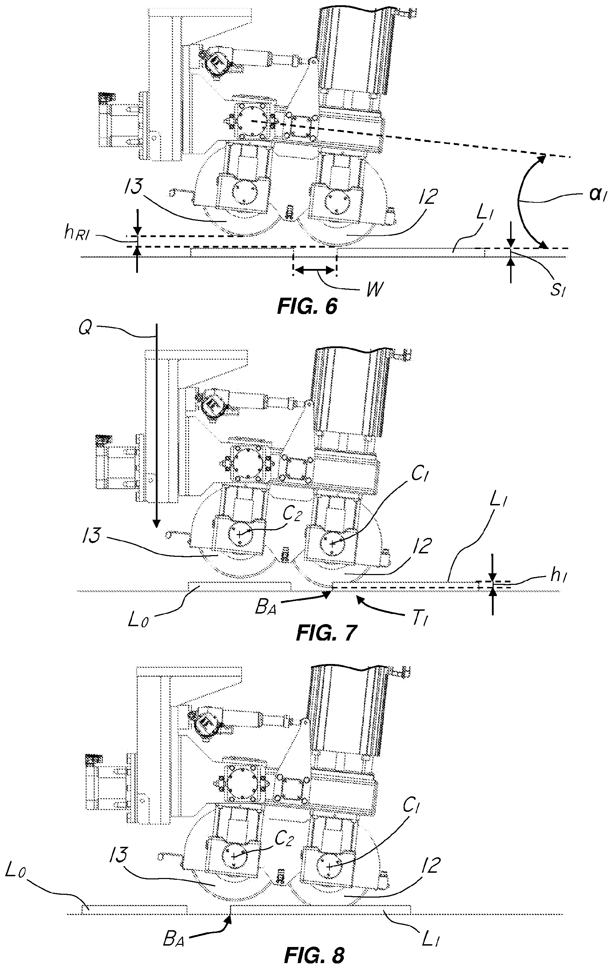

Therefore, the method according to the invention comprises a first step a) of first inclination of the frame **11** by a first predetermined angle **α₁** with respect to a first slab **L₁** to be cut so that the first blade **12** is lower than the second blade **13** by a first relative height **h_{R1},** as shown in **FIG. 6****.**

Subsequently, the method provides a step **b)** of pre-cutting the first slab **L₁** using the first blade **12,** as shown in **FIGS. 7** and **8****.**

Furthermore, before the step **b)** of pre-cutting there is provided a step **a₁)** of first lowering of the carriage **9** with respect to the work plane **8** so as to allow the first blade **12** to interact with the first slab **L₁** and carry out the pre-cutting **T₁,** as shown in **FIG. 7****.**

Preferably, the first lowering of the carriage **9** occurs in a substantially vertical direction **Q.**

Opportunely, the step **a₁)** of first lowering is carried out when the centre C₁ of the first blade **12** is positioned at the first transversal peripheral edge **B_{A}** of the first slab **L₁.**

By way of non-limiting example, during step **b)** of pre-cutting, the first slab **L₁** is pre-cut by the first blade **12** for a pre-cutting depth **h₁** which corresponds to 50% of the thickness **s₁** of the first slab **L₁.**

Furthermore, during step **b)** of pre-cutting, the second blade **13** does not interact with the first slab **L₁** and does not even interact with a possible slab **L₀** positioned preceding the first slab **L₁** along the cutting direction **D.**

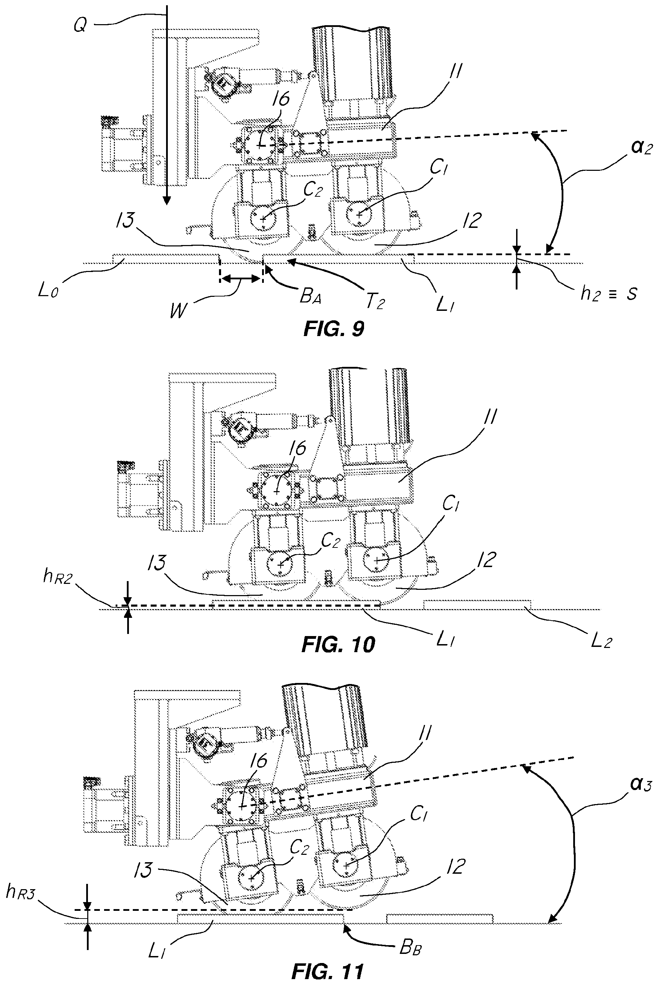

Subsequently, there are provided a step **c)** of second inclination of the frame **11** by a second predetermined angle **α₂** with respect to the first slab **L₁** so that the first blade **12** is higher than the second blade **13** by a second relative height **h_{R2},** and a step **d)** of cutting the first slab **L₁** using the second blade **13,** as shown respectively in **FIGS. 9** and **10****.**

Suitably, the step **c)** of second inclination is at least partially carried out during step **b)** of pre-cutting so that the movement of the cutting head **1** along the common cutting direction **D** is not interrupted.

Furthermore, during said step **c)** of second inclination there is provided a step **c₁)** of second lowering of the carriage **9** with respect to the work plane **8** so as to allow the second blade **13** to interact with the first slab **L₁** maintaining constant the pre-cutting depth **h₁** of the first blade **12.**

Preferably, the second lowering of the carriage **9** occurs in a substantially vertical direction **Q.**

Advantageously, the steps **c)** of second inclination and **c₁)** of second lowering are carried out at the same time and when the centre **C₂** of the second blade **13** is positioned at the first transversal peripheral edge **B_{A}** of the first slab **L₁.**

By way of non-limiting example, during step **d)** of cutting, the first slab **L₁** is cut by the second blade **13** for a cutting depth **h₂** which corresponds to 100% of the thickness **s₁** of the first slab **L₁.**

Lastly, the method according to the invention provides a step **e)** of third inclination of the frame **11** by a third predetermined angle **α₃** with respect to the first slab **L₁** so that the first blade **12** is higher than the second blade **13** by a third relative height **h_{R3}** greater than the second relative height **h_{R2}.**

Conveniently, the step **e)** of third inclination is at least partially carried out during said step **d)** of cutting and when the centre **C₁** of the first blade **12** is positioned at the second transversal peripheral edge **B_{B}** of the first slab **L₁.**

Furthermore, during the step **e)** of third inclination, the second blade **13** interacts with the first slab **L₁** maintaining constant the cutting depth **h₂** of the second blade **13.**

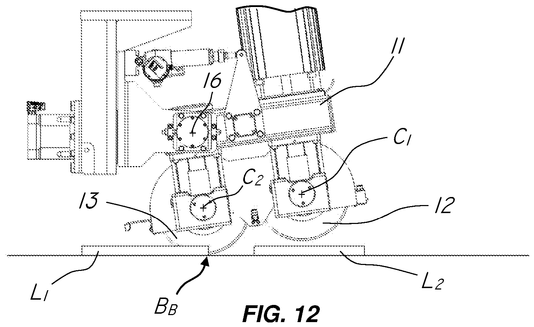

Following the step **e)** of third inclination, the cutting of the first slab **L₁** during the step **d)** may end when the centre **C₂** of the second blade **13** is positioned at the second transversal peripheral edge **B_{B}** of the first slab **L₁,** as better shown in **FIG. 12****.**

Therefore, step **e)** allows to prevent the first blade **12** from interacting with a second slab **L₂** arranged adjacent to the first slab **L₁** when cutting the first slab **L₁** in step **d).**

The first **h_{R1},** second **h_{R2}** and third relative height **h_{R3}** are calculated using the formula **h**_{R}=**V**×sin**α** ± **K,** wherein **K** is a predetermined constant relating to the thickness **s₁, s₂** of the slabs **L₁, L₂** being processed.

More precisely, the predetermined constant **K** is a numerical value comprised between 0 and the sum between the thickness **s** of the slab **Ks,** wherein **Ks** is a predetermined safety coefficient with value greater than 0 and calculated so as to prevent the blades **12, 13** from interacting with the slabs **L** being processed.

More precisely:
**h_{R1}**=**V**×sin**α**₁ ± **K₀**, wherein 0 < **K₀** < s₀ + **Ks,** wherein **s₀** is the thickness of the slab **L₀** possibly preceding the first slab **L₁**;
**h_{R2}=V**×sin**α₂** ± **K₁,** wherein 0 < **K₁** < S₁;
**h_{R3}=V**×sin**α₃** ± **K₂,** wherein 0 < **K₂** < s₂ + **Ks,** wherein **s₂** is the thickness of the second slab **L₂.**

It is clear that steps **a)-e)** of the method according to the invention, and more precisely the values of the predetermined angles **α₁, α₂, α₃** respectively of steps **a), c)** and **e)** for inclining the frame **11,** allow to carry out discontinuous or staggered cuts of two or more adjacent slabs along a horizontal axis, preventing the first blade **12** from interacting with the transversal peripheral edge **B_{A}** of a second slab **L₂** after cutting the first slab **L₁** by means of the second blade **13.**

At the same time, the method for cutting slabs arranged adjacent to each other using a cutting head **1** of the type described above, allows to space the first slab **L₁** from the second slab **L₂** by the same distance **W** that would be obtained by cutting the slabs **L₁, L₂** using a cutting head provided with only one cutting blade.

In the light of the above it is clear that the cutting method according to the invention achieves the pre-established objects and in particular it allows to reduce the distance between two slabs arranged adjacent to each other when cutting them.

The method according to the invention is susceptible to numerous modifications and variants falling within the scope of the attached claims.

Although the method has been described with particular reference to the attached figures, the reference numerals used in the description and in the claims are meant for improving the intelligibility of the invention and do not limit the claimed scope of protection in any manner whatsoever.

Throughout the description, reference to "an embodiment" or "the embodiment" or "some embodiments" indicate that a particular characteristic, structure or element described is comprised in at least one embodiment of the object of the present invention.

Furthermore, the particular characteristics, structures or elements may be combined in any appropriate fashion in one or more embodiments within the scope of the attached claims.

### Industrial applicability

The present invention is industrially applicable because it can be produced in industrial scale by industries belonging to the field of machining stone and/or ceramic materials.

## Claims

1. A method of cutting slabs **(L)** made of stone and/or ceramic material with a cutting head **(1)** having a tool-holder frame **(11)** mounted on a carriage **(9)** movable above the slabs **(L),** wherein said frame **(11)** supports at least one first **(12)** and one second blade **(13)** which are substantially vertical and mutually aligned along a longitudinal cutting direction **(D)** and have respective centres **(C₁, C₂)** spaced apart by a predetermined distance **(V),** said frame **(11)** being hinged to said carriage **(9)** by means of a substantially horizontal pin **(16)** so as to allow the oscillation of said frame **(11)** and vary the relative height (**h_{R}**) of said blades **(12, 13)** and the respective cutting depth **(h₁, h₂**) thereof, the method comprising the following steps:
**a)** first inclination of said frame **(11)** by a first predetermined angle (**α₁**) with respect to a first slab **(L₁)** to be cut so that said first blade **(12)** is lower than said second blade **(13)** by a first relative height **(h_{R1});**
**b)** pre-cutting the first slab **(L₁)** using said first blade **(12);**
**c)** second inclination of said frame **(11)** by a second predetermined angle (**α₂**) with respect to the first slab (**L₁**) so that said first blade **(12)** is higher than said second blade **(13)** by a second relative height (**h_{R2}**);
**d)** cutting the first slab **(L₁)** using said second blade **(13);**
**e)** third inclination of said frame **(11)** by a third predetermined angle (**α₃**) with respect to the first slab (**L₁**) so that said first blade **(12)** is higher than said second blade **(13)** by a third relative height **(h_{R3})** greater than said second relative height **(h_{R2})** so as to prevent said first blade **(12)** from interacting with a second slab (**L₂**) adjacent to the first slab (**L₁**).

2. Method as claimed in claim 1, wherein said first **(h_{R1}),** second **(h_{R2})** and third relative height (h_{R3}) are calculated using the formula **h_{R}=V×**sin**α** ± **K,** wherein **K** is a predetermined constant relating to the thickness (**s₁, s₂**) of the slabs **(L₁, L₂)** being processed.

3. Method as claimed in claim 2, wherein said predetermined constant **(K)** is a numerical value comprised between 0 and **s+Ks,** wherein **Ks** is a predetermined safety coefficient with value greater than 0 so as to prevent said first **(12)** and second blade **(13)** from interacting with the slabs **(L₁, L₂**) being processed.

4. Method as claimed in claim 1, wherein before said step **b)** of pre-cutting there is provided a step **a₁**) of first lowering of said carriage **(9)** with respect to the work plane **(8)** on which the slabs **(L₁, L₂)** are arranged to allow said first blade **(12)** to interact with the first slab **(L₁).**

5. Method as claimed in claim 4, wherein said step **a₁**) of first lowering is carried out when the centre (**C₁**) of said first blade **(12)** is positioned at the first transversal peripheral edge (**B_{A}**) of the first slab **(L₁).**

6. Method as claimed in claim 1, wherein said step **c)** of second inclination is carried out at least partially during said step **b)** of pre-cutting.

7. Method as claimed in claim 1, wherein during said step **c)** of second inclination there is provided a step **c₁)** of second lowering of said carriage **(9)** with respect to the work plane **(8)** on which the slabs **(L₁, L₂)** are arranged so as to allow said second blade **(13)** to interact with the first slab (L₁) maintaining the pre-cutting depth **(h₁)** of said first blade **(12)** constant.

8. Method as claimed in claim 6, wherein said steps **c)** of second inclination and **c₁)** of second lowering are carried out at the same time and when the centre **(C₂)** of said second blade **(13)** is positioned at the first transversal peripheral edge **(B_{A})** of the first slab **(L₁).**

9. Method as claimed in claim 1, wherein said step **e)** of third inclination is carried out at least partially during said step **d)** of cutting.

10. Method as claimed in claim 1, wherein said step **e)** of third inclination is carried out when the centre **(C₁)** of said first blade **(12)** is positioned at the second transversal peripheral edge **(B_{B})** of the first slab **(L₁).**

11. Method as claimed in claim 1, wherein during said step **e)** of third inclination, said second blade **(13)** interacts with the first slab **(L₁)** maintaining constant the cutting depth **(h₂)** of said second blade **(13).**

12. Method as claimed in claim 1, wherein said first **(12)** and second blade **(13)** have substantially equal diameters.

## Patentansprüche

1. Verfahren zum Schneiden von Platten (L) aus Stein und/oder keramischem Material mit einem Schneidkopf (1), der einen Werkzeughalterahmen (11) aufweist, der auf einem Schlitten (9) montiert ist, der oberhalb der Platten (L) beweglich ist, wobei der Rahmen (11) mindestens eine erste (12) und eine zweite Klinge (13) trägt, die im Wesentlichen vertikal und entlang einer Längsschneidrichtung (D) zueinander ausgerichtet sind und jeweilige Mittelpunkte (C₁, C₂) aufweisen, die um einen vorbestimmten Abstand (V) voneinander beabstandet sind, wobei der Rahmen (11) mittels eines im Wesentlichen horizontalen Stifts (16) an dem Schlitten (9) angelenkt ist, um die Schwingung des Rahmens (11) zu ermöglichen und die relative Höhe (h_{R}) der Klingen (12, 13) und deren jeweilige Schnitttiefe (h₁, h₂) zu verändern, wobei das Verfahren die folgenden Schritte umfasst:
a) erste Neigung des Rahmens (11) um einen ersten vorbestimmten Winkel (α₁) in Bezug auf eine erste zu schneidende Platte (L₁), so dass das erste Messer (12) um eine erste relative Höhe (h_{R1}) niedriger ist als das zweite Messer (13)
b) Vorschneiden der ersten Platte (L₁) unter Verwendung des ersten Messers (12);
c) zweite Neigung des Rahmens (11) um einen zweiten vorbestimmten Winkel (α₂) in Bezug auf die erste Platte (L₁), so dass die erste Klinge (12) um eine zweite relative Höhe (h_{R2}) höher ist als die zweite Klinge (13);
d) Schneiden der ersten Platte (L₁) mit dem zweiten Messer (13);
e) dritte Neigung des Rahmens (11) um einen dritten vorbestimmten Winkel (α₃) in Bezug auf die erste Platte (L₁), so dass die erste Klinge (12) um eine dritte relative Höhe (h_{R3}) höher ist als die zweite Klinge (13), die größer ist als die zweite relative Höhe (h_{R2}), um zu verhindern, dass die erste Klinge (12) mit einer zweiten Platte (L₂) neben der ersten Platte (L₁) zusammenwirkt.

2. Verfahren nach Anspruch 1, wobei die erste (h_{R1}), zweite (h_{R2}) und dritte relative Höhe (h_{R3}) unter Verwendung der Formel h_{R}=V x sinα ± K berechnet werden, wobei K eine vorbestimmte Konstante ist, die sich auf die Dicke (s₁, s₂) der bearbeiteten Platten (L₁, L₂) bezieht.

3. Verfahren nach Anspruch 2, wobei die vorbestimmte Konstante (K) ein numerischer Wert zwischen 0 und s±Kₛ ist, wobei Kₛ ein vorbestimmter Sicherheitskoeffizient mit einem Wert größer als 0 ist, um zu verhindern, dass die erste (12) und die zweite Klinge (13) mit den zu bearbeitenden Platten (L₁, L₂) in Wechselwirkung treten.

4. Verfahren nach Anspruch 1, wobei vor dem Schritt b) des Vorschneidens ein Schritt a₁) des ersten Absenkens des Schlittens (9) in Bezug auf die Arbeitsebene (8), auf der die Platten (L₁, L₂) angeordnet sind, vorgesehen ist, damit die erste Klinge (12) mit der ersten Platte (L₁) zusammenwirken kann.

5. Verfahren nach Anspruch 4, wobei der Schritt a₁) des ersten Absenkens durchgeführt wird, wenn die Mitte (C₁) der ersten Klinge (12) an der ersten Querumfangskante (B_{A}) der ersten Platte (L₁) positioniert ist.

6. Verfahren nach Anspruch 1, wobei der Schritt c) des zweiten Neigens zumindest teilweise während des Schritts b) des Vorschneidens ausgeführt wird.

7. Verfahren nach Anspruch 1, wobei während des Schritts c) der zweiten Neigung ein Schritt c₁) des zweiten Absenkens des Schlittens (9) in Bezug auf die Arbeitsebene (8), auf der die Platten (L₁, L₂) angeordnet sind, vorgesehen ist, um es dem zweiten Messer (13) zu ermöglichen, mit der ersten Platte (L₁) zusammenzuwirken, wobei die Vorschneidetiefe (h₁) des ersten Messers (12) konstant gehalten wird.

8. Verfahren nach Anspruch 6, wobei die Schritte c) der zweiten Neigung und c₁) des zweiten Absenkens zur gleichen Zeit und dann ausgeführt werden, wenn die Mitte (C₂) des zweiten Messers (13) an der ersten transversalen Umfangskante (B_{A}) der ersten Platte (L₁) positioniert ist.

9. Verfahren nach Anspruch 1, wobei der Schritt e) der dritten Neigung zumindest teilweise während des Schritts d) des Schneidens ausgeführt wird.

10. Verfahren nach Anspruch 1, wobei der Schritt e) der dritten Neigung durchgeführt wird, wenn die Mitte (C₁) der ersten Klinge (12) an der zweiten transversalen Umfangskante (B_{B}) der ersten Platte (L₁) positioniert ist.

11. Verfahren nach Anspruch 1, wobei während des Schritts e) der dritten Neigung die zweite Klinge (13) mit der ersten Platte (L₁) zusammenwirkt und die Schnitttiefe (h₂) der zweiten Klinge (13) konstant hält.

12. Verfahren nach Anspruch 1, wobei die erste (12) und die zweite Klinge (13) im Wesentlichen gleiche Durchmesser haben.

## Revendications

1. Procédé de découpe de dalles (L) en pierre et/ou en céramique à l'aide d'une tête de découpe (1) comportant un cadre porte-outil (11) monté sur un chariot (9) mobile au-dessus des dalles (L), dans lequel ledit cadre (11) supporte au moins une première (12) et une seconde lame (13) qui sont sensiblement verticales et mutuellement alignées le long d'une direction de coupe longitudinale (D) et ont des centres respectifs (C₁, C₂) espacés d'une distance prédéterminée (V), ledit cadre (11) étant articulé sur ledit chariot (9) au moyen d'un axe sensiblement horizontal (16) de manière à permettre l'oscillation dudit cadre (11) et à faire varier la hauteur relative **(h_{R})** de ces lames (12, 13) et leur profondeur de coupe respective (h₁, h₂), le procédé comprenant les étapes suivantes :
a) première inclinaison dudit cadre (11) d'un premier angle prédéterminé (α₁) par rapport à une première dalle (L₁) à couper de sorte que ladite première lame (12) soit plus basse que ladite seconde lame (13) d'une première hauteur relative (h_{R1}),
b) pré-découpage de la première plaque (L₁) à l'aide de ladite première lame (12);
c) seconde inclinaison dudit cadre (11) d'un second angle prédéterminé (α₂) par rapport à la première dalle (L₁) de sorte que ladite première lame (12) soit plus haute que ladite seconde lame (13) d'une seconde hauteur relative (hR2);
d) couper la première dalle (L₁) à l'aide de la deuxième lame (13);
e) troisième inclinaison dudit cadre (11) d'un troisième angle prédéterminé (α₃) par rapport à la première dalle (L₁) de sorte que ladite première lame (12) est plus haute que ladite deuxième lame (13) d'une troisième hauteur relative (h_{R3}) supérieure à ladite deuxième hauteur relative (h_{R2}) afin d'empêcher ladite première lame (12) d'interagir avec une deuxième dalle (L₂) adjacente à la première dalle (L₁).

2. Procédé selon la revendication 1, dans lequel lesdites première (h_{R1}), deuxième (h_{R2}) et troisième hauteur relative (h_{R3}) sont calculées à l'aide de la formule h_{R}=V x sinα ± K, dans laquelle K est une constante prédéterminée relative à l'épaisseur (s₁, s₂) des dalles (L1, L₂) en cours de traitement.

3. Procédé selon la revendication 2, dans lequel ladite constante prédéterminée (K) est une valeur numérique comprise entre 0 et s±Kₛ, où Kₛ est un coefficient de sécurité prédéterminé de valeur supérieure à 0 de manière à empêcher ladite première (12) et seconde lame (13) d'interagir avec les plaques (L₁, L₂) en cours de traitement.

4. Procédé selon la revendication 1, dans lequel avant ladite étape b) de pré-coupe est prévue une étape a₁) de premier abaissement dudit chariot (9) par rapport au plan de travail (8) sur lequel sont disposées les dalles (L₁, L₂) pour permettre à ladite première lame (12) d'interagir avec la première dalle (L₁).

5. Procédé selon la revendication 4, dans lequel ladite étape a₁) de premier abaissement est effectuée lorsque le centre (C₁) de ladite première lame (12) est positionné au niveau du premier bord périphérique transversal (B_{A}) de la première dalle (L₁).

6. Procédé selon la revendication 1, dans lequel ladite étape c) de seconde inclinaison est réalisée au moins partiellement pendant ladite étape b) de prédécoupe.

7. Procédé selon la revendication 1, dans lequel pendant ladite étape c) de deuxième inclinaison, il est prévu une étape c₁) de deuxième abaissement dudit chariot (9) par rapport au plan de travail (8) sur lequel sont disposées les dalles (L₁, L₂) de manière à permettre à ladite deuxième lame (13) d'interagir avec la première dalle (L₁) en maintenant constante la profondeur de prédécoupe (h₁) de ladite première lame (12).

8. Procédé selon la revendication 6, dans lequel lesdites étapes c) de deuxième inclinaison et c₁) de deuxième abaissement sont effectuées en même temps et lorsque le centre (C₂) de ladite deuxième lame (13) est positionné au niveau du premier bord périphérique transversal (B_{A}) de la première dalle (L₁).

9. Procédé selon la revendication 1, dans lequel ladite étape e) de troisième inclinaison est réalisée au moins partiellement pendant ladite étape d) de coupe.

10. Procédé selon la revendication 1, dans lequel ladite étape e) de troisième inclinaison est réalisée lorsque le centre (C₁) de ladite première lame (12) est positionné au niveau du deuxième bord périphérique transversal (B_{B}) de la première dalle (L₁).

11. Procédé selon la revendication 1, dans lequel pendant ladite étape e) de troisième inclinaison, ladite deuxième lame (13) interagit avec la première dalle (L₁) en maintenant constante la profondeur de coupe (h₂) de ladite deuxième lame (13).

12. Procédé selon la revendication 1, dans lequel la première (12) et la deuxième lame (13) ont des diamètres sensiblement égaux.
